# EUROPEAN PATENT APPLICATION

(11) **EP 2 133 355 A1**
(43) Date of publication of application: **16.12.2009**
(21) Application number: 08721325.2
(22) Date of filing: 05.03.2008
(51) Int. Cl.: C07F 9/09

(54) **COMPOSITION CONTAINING CHLOROMETHYL PHOSPHATE DERIVATIVE WITH IMPROVED STABILITY AND METHOD FOR PRODUCING THE SAME**

(30) Priority: 06.03.2007 JP 2007056003
(71) Applicant: Eisai R&D Management Co., Ltd., Bunkyo-Ku Tokyo 112-8088 (JP)
(72) Inventor: SATO, Keizo, Tsukuba-shi Ibaraki 300-2635 (JP); ABE, Shinya, Tsukuba-shi Ibaraki 300-2635 (JP); YOSHIZAWA, Kazuhiro, Kamisu-shi Ibaraki 314-0255 (JP); WAKASUGI, Kazunori, Tsukuba-shi Ibaraki 300-2635 (JP); NEGI, Shigeto, Tsukuba-shi Ibaraki 300-2635 (JP); MIYAZAWA, Mamoru, Kamisu-shi Ibaraki 314-0255 (JP)
(74) Representative: HOFFMANN EITLE
(86) International application number: PCT/JP2008/053905
(87) International publication number: WO 2008/108384

(57) **Abstract**

The present invention provides a process or the like which is employed for producing chloromethyl phosphate derivatives that are useful for producing water-soluble prodrugs, and which are excellent from the points of view of workability, operativity and energy saving. According to the present invention, there is provided a process for producing a composition containing a compound represented by the following formula (I) and a tertiary amine, 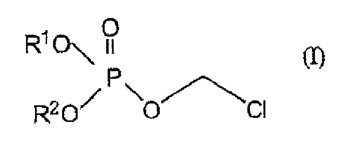 (wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring), the proces comprising the step of adding the tertiary amine having a boiling point at 1 atmosphere of 150°C or higher to the compound represented by formula (I).

## Description

### Technical Field

The present invention relates to a chloromethyl phosphate derivative for producing a water-soluble prodrug, and more specifically, to a composition containing at least one tertiary amine and the chloromethyl phosphate derivative and having improved storage stability, and a process for producing the same, as well as a method for stabilizing chloromethyl phosphate derivative.

### Background Art

The compound represented by the following formula is known as one example of water-soluble prodrug, (for example, refer to Patent Reference 1). This compound is a water-soluble azole compound that is useful in the treatment of serious systemic fungal infection.

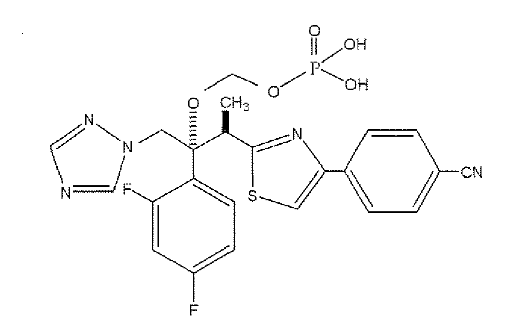

In addition, this water-soluble azole compound is also known to be producible via the following scheme (refer to the above Patent Reference 1).

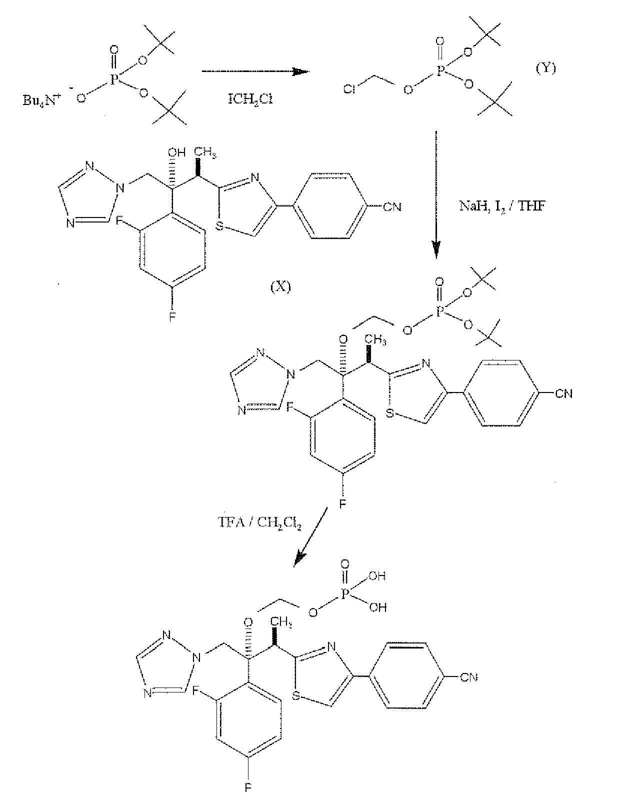

As shown in the above scheme, in order to produce the water-soluble prodrug, it is necessary for chloromethyl phosphates (corresponding to Y in the above scheme) to react with an active drug having, for example, a hydroxyl group (corresponding to X in the above scheme). Herein, the term "prodrug" means a derivative of a drug, which reverts to the original drug inside the organism. Note that, since the usefulness of the drug is limited by the extent of water-solubility thereof, converting an active drug into a water-soluble prodrug often becomes a subject of research and development.

However, when producing the water-soluble azole compound according to the above reaction scheme, difficulties are expected to arise in the industrial production in particular of the water-soluble azole compounds, from the facts that (1) there are concerns on the stable supply of tetrabutyl ammonium di-tert-butyl phosphate, a compound serving as the source of chloromethyl phosphate (Y) and that (2) highly toxic chloroiodomethane is used.

Meanwhile, other processes for producing the chloromethyl phosphate derivative (Y) are also known (for example, refer to Non-patent Reference 1). In this Non-patent Reference 1, it is disclosed that a dialkyl or dibenzyl chloromethyl phosphate derivative can be produced by using, dialkyl or dibenzyl phosphate and chloromethyl chlorophosphate as raw materials in the presence of a phase-transfer catalyst in a water-chloromethane mixed solvent.

However, since the halogen-based solvents has to be used absolutely in the production process of the Non-patent Reference 1, in order to achieve an industrial application thereof, there will be an important burden on the environment, also accompanied by the complexity of waste liquid treatment. Therefore, the production process disclosed in the Non-patent Reference 1 does not qualify as an excellent production process from the points of view of workability, operativity and energy saving, and is not realistic as an industrial production method of the chloromethyl phosphate derivative.
[Patent Reference 1] Japanese Unexamined Patent Application Publication No. 2004-518640
[Non-patent Reference 1] Antti Mantyla et al., Tetrahedron Letters 43 (2002) 3793-3794

### Disclosure of Invention

### Problems to be Solved by the Invention

An object of the present invention is to provide, in regard to the chloromethyl phosphate derivative that is useful in the production of the water-soluble prodrug, a process for producing the chloromethyl phosphate derivative having excellent workability, operativity and energy saving without using a highly toxic reagent.

### Means for Solving the Problems

Thus, the present inventors, in view of the aforementioned issues, conducted earnest studies on a process for producing the chloromethyl phosphate derivatives and as a result established a production process that excels in workability, and the like, and at the same time, discovered that, in fact, the chloromethyl phosphate derivative *per se* was unstable, obtained the knowledge for stabilizing the chloromethyl phosphate, and reached completion of the present invention. In addition, completion of the present invention was reached based on the observation that, in a composition comprising chloromethyl phosphate added with amine, addition of an amine having a specific boiling point such that amine and the like do not volatilize even if there is operation such as concentration during handling of the composition contributes to the stabilization of chloromethyl phosphate *per* se.

That is to say, in the first aspect of the present invention, there is provided:
[1] A composition comprising:
(A) a compound represented by the following formula (I)

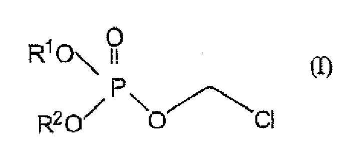

(wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring.); and
(B) a first tertiary amine having a boiling point at 1 atmosphere of 150°C or higher.
[2] the composition according to item [1], further comprising a second tertiary amine different from the first tertiary amine.
[3] the composition according to item [1] or [2], wherein the first tertiary amine is tri(C4-C6 alkyl) amine or trialkanol amine.
[4] the composition according to any one of items [1] to [3], wherein the first tertiary amine is tri-n-butylamine or triethanolamine.
[5] the composition according to any one of items [2] to [4], wherein the second tertiary amine is tri(C1-C3 alkyl) amine or N-alkyl morpholine.
[6] the composition according to any one of items [2] to [5], wherein the second tertiary amine is triethylamine, N,N-diisopropyl ethylamine or N-methyl morpholine.
[7] the composition according to any one of items [1] to [6], wherein at least 2.0 mol% of the first tertiary amine is contained based on the compound represented by formula (I).
[8] the composition according to any one of items [1] to [7], wherein at least 2.0 mol% of the second tertiary amine is contained based on the compound represented by formula (I).
[9] the composition according to any one of items [1] to [8], wherein the R1 and the R2 are identical or different from each other, and represent an n-butyl group, an iso-butyl group, a tert-butyl group, a vinyl group, an allyl group, or a benzyl group which may have a substituent.
[10] the composition according to any one of items [1] to [9], wherein the R1 and the R2 are identical or different from each other, and represent a tert-butyl group, an allyl group or a benzyl group.

Further, in the second aspect of the present invention, there is provided:
[11] A process for producing a composition comprising a compound represented by the following formula (I) and a tertiary amine,

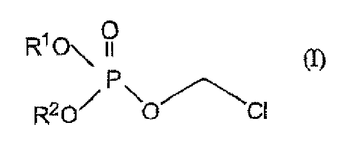

(wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring.)
the process comprising a step of adding a first tertiary amine having a boiling point at 1 atmosphere of 150°C or higher to the compound represented by formula (I). [12] the process according to item [11], further comprising a step of adding a second tertiary amine different from the first tertiary amine.
[13] the process according to item [11] or [12], wherein at least 2.0mol% of the first tertiary amine is added to the compound represented by formula (I).
[14] the process according to any one of items [11] to [13], wherein at least 2.0mol% of the second tertiary amine is added to the compound represented by formula (I).
[15] the process according to any one of items [11] to [14], wherein the compound represented by formula (I) is obtained by a process comprising the steps of:
(i) reacting paraformaldehyde with chlorosulfonic acid in the presence of thionyl chloride so as to obtain chloromethyl chlorosulfonate, and
(ii) reacting, in a solvent containing a phase-transfer catalyst and a base, a compound represented by the following formula (II),

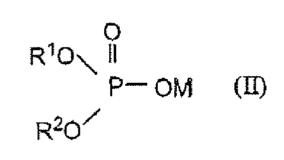

(wherein R1 and R2 are identical or different from each other, and represent a C1-C6 alkyl group, a C2-C6 alkenyl group or a C6-C14 aryl C1-C6 alkyl group which may have a substituent, R1 and R2 may together form a ring, and M represents a hydrogen atom or an alkaline metal) and the chloromethyl chlorosulfonate.
[16] the process according to teim [15], wherein the solvent is an ether-based solvent.
[17] the process according to item [16], wherein the ether-based solvent is cyclopentyl methyl ether or tert-butyl methyl ether.
[18] the process according to any one of items [15] to [17], wherein the phase-transfer catalyst is tetrabutylammonium hydrogen sulfate, and the base is dipotassium hydrogen phosphate or sodium hydrogen carbonate.

Furthermore, in the third aspect of the present invention, there is provided:
[19] A method for stabilizing a compound represented by the following formula (I),

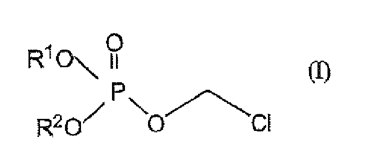

(wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring),
the method comprising a step of adding a first tertiary amine having a boiling point at 1 atmosphere of 150°C or higher to the compound represented by Formula (I).
[20] the stabilization method according to item [19], wherein at least 2.0mol% of the first tertiary amine is added based on the compound represented by formula (I).

### Advantageous Effects of the Invention

According to the process of the present invention, the chloromethyl phosphate derivatives can be produced without using highly toxic reagent or halogen-based solvent with a process that is excellent from the points of view of workability, operativity and energy saving, thus, the production process is useful industrially. In addition, according to the present invention, stabilization of chloromethyl phosphate derivative is realized by adding tertiary amine to the chloromethyl phosphate derivative applicable to the production of the water-soluble prodrug, a stable supply of said derivative becomes possible, which is beneficial to industrial production of the water-soluble prodrug.

### Best Mode for Carrying Out the invention

The following embodiment is an illustrative example for describing the present invention, and the purpose is not to limit the present invention to this embodiment only. The present invention can be carried out in a variety of modes, as long as there is no departure from the gist thereof.

The present inventor, during earnest studies on a process for producing the chloromethyl phosphate derivatives that excel in workability, and the like, without using a highly toxic reagent, obtained the knowledge that the chloromethyl phosphate derivative *per se* was thermally unstable, and discovered a measure to stabilize the chloromethyl phosphate derivative *per* se. That is to say, for the chloromethyl phosphate derivative, stabilization thereof is realized by giving it the constitution of the composition according to the present invention.

The composition according to the present invention comprises;
(A) a compound represented by the following formula (I): and

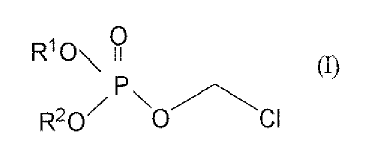

(wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring)
(B) a first tertiary amine having a boiling point at 1 atmosphere of 150°C or higher.

In the above compound represented by Formula (I), the term "C1-C6 alkyl group" used in the present invention means a linear or branched alkyl group having a carbon number of 1 to 6. Specifically, examples of the term "C1-C6 alkyl group" include a methyl group, an ethyl group, a *n*-propyl group, an *iso*-propyl group, a n-butyl group, an *iso*-butyl group, a *sec*-butyl group, a *tert*-butyl group, a *n*-pentyl group, a 1,1-dimethyl propyl group, a 1,2-dimethyl propyl group, a 2,2-dimethyl propyl group, a 1-ethyl propyl group, a *n*-hexyl group, a 1-ethyl-2-methyl propyl group, a 1,1,2-trimethyl propyl group, a 1-ethyl butyl group, a 1-methyl butyl group, a 2-methyl butyl group, a 1,1-dimethyl butyl group, a 1,2-dimethyl butyl group, a 2,2-dimethyl butyl group, a 1,3-dimethyl butyl group, a 2,3-dimethyl butyl group, a 2-ethyl butyl group, a 2-methyl pentyl group, a 3-methyl pentyl group, and the like, preferably, a methyl group, an ethyl group, a *n*-propyl group, an *iso*-propyl group, a *n*-butyl group, an *iso-*butyl group, a *sec*-butyl group, a *tert*-butyl group, a *n*-pentyl group, and the like, more preferably, a *n*-butyl group, an *iso*-butyl group and a *tert*-butyl group.

The term "C2-C6 alkenyl group" used in the present invention means a linear or branched alkenyl group having a carbon number of 2 to 6, specifically, examples of the term "C2-C6 alkenyl group" include a vinyl group, an allyl group, a 1-propenyl group, an isopropenyl group, a 2-methyl-1-propenyl group, a 2-methyl-2-propenyl group, a 1-butenyl group, a 2-butenyl group, a 3-butenyl group, a 1-pentenyl group, a 1-hexenyl group, a 1,3-hexadienyl group, a 1,5-hexadienyl group, and the like, preferably, a vinyl group, an allyl group, a 1-propenyl group and isopropenyl group, and more preferably, a vinyl group and an allyl group.

The term "C6-C14 aryl C1-C6 alkyl group" in the term "C6-C14 aryl C1-C6 alkyl group which may have a substituent" used in the present invention means a group in which an arbitrary hydrogen atom of a C1-C6 alkyl group has been substituted with a C6-C14 aryl group. Herein, the term "C6-C14 aryl group" means an aryl group constituted by 6 to 14 carbon atoms and includes condensed cyclic groups, such as, monocyclic group, bicyclic group, or tricyclic group. Examples of the term "C6-C14 aryl group" include a phenyl group, an indenyl group, a naphthyl group, an azurenyl group, a heptalenyl group, a biphenyl group, an indacenyl group, an acenaphtylenyl group, a fluorenyl group, a phenalenyl group, a phenanthrenyl group, an anthracenyl group, a benzocyclooctenyl group, and the like. Examples of the term "C6-C14 aryl C1-C6 alkyl group which may have a substituent" include a benzyl group which may have a substituent, a phenethyl group which may have a substituent, a naphthyl methyl group which may have a substituent, a naphthyl ethyl group which may have a substituent, an anthracenyl methyl group which may have a substituent, an anthracenyl ethyl group which may have a substituent, and the like, preferably, a benzyl group, a phenethyl group, a naphthyl methyl group, and the like, and more preferably a benzyl group.

In addition, examples of the substituent in "which may have a substituent" of the above "C6-C14 aryl C1-C6 alkyl group which may have s substituent", unless explicitly indicated, include:
substituent groups including (1) a halogen atom (for example, a fluorine atom, a chlorine atom, a bromine atom, an iodide atom); (2) a hydroxyl group; (3) a cyano group; (4) a nitro group; (5) a carboxyl group; (6) an oxo group; (7) an amino group; (8) a C1-C6 alkyl group (for example, a methyl group, an ethyl group, a n-propyl group, an *iso*-propyl group, a *n*-butyl group, a *tert*-butyl group, a *n*-pentyl group, a 1,1-dimethyl propyl group, a 1,2-dimethyl propyl group, a 2,2-dimethyl propyl group, a 1-ethyl propyl group, a 2-methyl butyl group, a *n*-hexyl group, and the like); (9) a C1-C6 alkoxy group (for example, a methoxy group, an ethoxy group, a *n*-propoxy group, an *iso*-propoxy group, a *n*-butoxy group, an *iso*-butoxy group, a sec-butoxy group, a *tert*-butoxy group, a *n*-pentyloxy group, an *iso*-pentyloxy group, a *sec-*pentyloxy group, a *n*-hexyloxy group, an *iso*-hexyloxy group, a 1,1-dimethyl propoxy group, a 1,2-dimethyl propoxy group, a 2,2-dimethyl propoxy group, and the like); (10) a C2-C6 alkenyl group (for example, a vinyl group, an allyl group, a 1-propenyl group, an isopropenyl group, a 2-methyl-1-propenyl group, a 1-butenyl group, and the like); (11) a C2-C6 alkynyl group (for example, an ethynyl group, a 1-propynyl group, a 2-propynyl group, a 1-butynyl group, a 2-butynyl group, a 3-butynyl group, a 1-ethynyl-2-propynyl group, a 1-methyl-2-propynyl group, and the like); (12) a C3-C8 cycloalkyl group (for example, a cyclopropyl group, a cyclobutyl group, a cyclopentyl group, a cyclohexyl group, a cycloheptyl group, a cyclooctyl group, and the like); (13) a C3-C8 cycloalkenyl group (for example, a cyclopropen-1-yl, a cyclopropen-3-yl, a cyclobuten-1-yl, a cyclobuten-3-yl, a 1,3-cyclobutadien-1-yl, a cyclopenten-1-yl, a cyclopenten-3-yl, a cyclopenten-4-yl, a 1,3-cyclopentadien-1-yl, a 1,3-cyclopentadien-2-yl, a 1,3-cyclopentadien-5-yl, a cyclohexen-1-yl, a cyclohexen-3-yl, a cyclohexen-4-yl, a 1,3-cyclohexadien-1-yl, a 1,3-cyclohexadien-2-yl, a 1,3-cyclohexadien-5-yl, a 1,4-cyclohexadien-3-yl, a 1,4-cyclohexadien-1-yl, and the like); (14) a C2-C7 acyl group (for example, an acetyl group, a propionyl group, a butyryl group, and the like); (15) a formyl group, and the like, and the term "which may have a substitute" means that it may have one to 5 substitute group of 1 or more species selected from the above-mentioned substituent groups.

The term "R1 and R2 may together form a ring" used in the present invention means forming a 5- to 8-membered ring (which may have a substitute and which may be saturated, partially saturated, or unsaturated) in which a phosphorus atom is contained. Examples of the term "R1 and R2 may together form a ring" include: a partial structure represented by

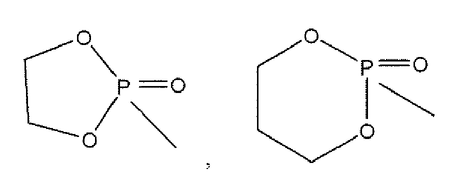

and the like.

Note that, from the point of view that the chloromethyl phosphate derivative used in the present invention reacts with an active drug, and then is hydrolyzed to be converted into the water-soluble prodrug, the groups represented by R1 and R2 preferably represents hydroxyl group-protecting groups.

The term "tertiary amine" used in the present invention means a compound in which all three hydrogens of the ammonia have been substituted by groups other than hydrogen atoms. The composition according to the present invention contains the above compound represented by formula (I) and a first tertiary amine having a boiling point at 1 atmosphere of 150°C or higher. Here, regarding the boiling point for the first tertiary amine, taking into consideration the non-volatility of the tertiary amine contained in the composition, a boiling point at 1 atmosphere of 160°C or higher is preferable and 180°C or higher is more preferable. In addition, it is preferable that a second tertiary amine different from the first tertiary amine is contained in the composition according to the present invention.

In the present invention, examples of the first tertiary amine having a boiling point at 1 atmosphere of 150°C or higher include tri(C4-C6) alkylamine and trialkanol amine. Here, the term "C4-C6 alkyl" in tri(C4-C6) alkylamine means a linear or branched alkyl group having 4 to 6 carbons. Specific examples thereof include an n-butyl group, an iso-butyl group, a sec-butyl group, a tert-butyl group, an n-pentyl group, a 1,1-dimethylpropyl group, a 1,2-dimethylpropyl group, a 2,2-dimethylpropyl group, a 1-ethylpropyl group, an n-hexyl group, a 1-ethyl-2-methylpropyl group, a 1,1,2-trimethylpropyl group, a 1-ethylbutyl group, a 1-methylbutyl group, a 2-methylbutyl group, a 1,1-dimethylbutyl group, a 1,2-dimethylbutyl group, a 2,2-dimethylbutyl group, a 1 ,3-dimethylbutyl group, a 2,3-dimethylbutyl group, a 2-ethylbutyl group, a 2-methyl pentyl group, a 3-methyl pentyl group and the like, preferably, an n-propyl group, an n-butyl group, a tert-butyl group, an n-pentyl group and the like, and more preferably, an n-butyl group and a tert-butyl group.
Specific examples of tri(C4-C6) alkylamine used in the present invention include tri-n-butylamine, tri-tert-butylamine, tri-n-pentylamine, tri-n-hexylamine, and tri-n-butylamine and tri-n-pentylamine are preferable. Note that the boiling point at 1 atmosphere of tri-n-butylamine is 216°C.

In addition, the term "alkanol" in " trialkanol amine" used in the present invention means an alcohol compound in which one or more hydrogens on a hydrocarbon (alkane) having 1 to 6 carbons have been substituted with hydroxyl groups. Specific examples of alkanol include methanol, ethanol, 1-propanol, 2-propanol, 1-butanol, 2-butanol, 2-methyl-2-propanol and the like. Specific examples of trialkanol amine used in the present invention include trimethanol amine, triethanolamine and the like, and triethanolamine is preferable. Note that the boiling point at 1 atmosphere of triethanolamine is 193°C.

Specific examples of second tertiary amine used in the present invention include tri(C1-C3 alkyl) amine, N-alkyl morpholine, di(N-alkyl) piperazine or N-alkyl piperidine and the like. Here, the term "C1-C3 alkyl" in tri(C1-C3 alkyl) amine means a linear or branched alkyl group having 1 to 3 carbons. Specific examples thereof include a methyl group, an ethyl group, an n-propyl group, an iso-propyl group. Specific examples of tri(C1-C3 alkyl) amine used in the present invention include trimethylamine, triethylamine, tris(methoxyethyl) amine, tripropylamine, N,N-diisopropyl methylamine, N,N-diisopropyl ethylamine and the like, and triethylamine and N,N-diisopropyl ethylamine are preferable. Note that the boiling point at 1 atmosphere of N, N-diisopropyl ethylamine is 127°C.
The term "alkyl" in N-alkylmorpholine, di(N-alkyl)piperazine or N-alkylpiperidine means the above C1-C6 alkyl and C1-C6 cycloalkyl, which may have a substituent. Preferably, examples of N-alkylmorpholine, di(N-alkyl)piperazine or N-alkylpiperidine include N-methyl morpholine, N-ethyl morpholine, di(N-methyl) piperazine, di(N-ethyl) piperazine, N-methyl piperidine, N-ethyl piperidine, 1,8-diazabicyclo[5.4.0]undeca-7-ene, 1,4-diazabicyclo[2.2.2]octane and the like, and more preferably, N-methyl morpholine. Note that the boiling point of N-methyl morpholine is 115 to 116°C/750mmHg.
From the point of view of long-term conservation of the compound according to the present invention, as second tertiary amines added as necessary, N,N-diisopropyl ethylamine, N-methyl morpholine and the like are particularly preferable.

In the composition according to the present invention, at least 2.0mol%, preferably at least 3.0mol%, more preferably at least 4.0mol%, and even more preferably at least 5.0mol% of the first tertiary amine is contained based on the compound represented by the above-mentioned formula (I). In addition, in the composition according to the present invention, at least 2.0mol%, preferably at least 3.0mol%, more preferably at least 4.0mol%, and even more preferably at least 5.0mol% of the second tertiary amine is contained based on the compound represented by the above-mentioned formula (I). Although the mechanism thereof is not clear, the presence, in this way, of such amounts of first tertiary amine allows the stability during conservation of chloromethyl phosphate derivative to be secured, which is usable as necessary for the production of water-soluble prodrug. In particular, even if the composition according to the present invention is subjected to operations such as concentration, due to the inclusion of a tertiary amine having a boiling point at 1 atmosphere of 150°C or higher, the possibility for the tertiary amine to volatilize from the composition according to the present invention is low, allowing long-term stabilization to be maintained. Note that, in order not to influence the reactivities of the chloromethyl phosphate derivatives *per* se and the active drug even in the presence of the tertiary amine, the tertiary amine can be selected suitably according to the functional groups of the active drug.

The composition according to the present invention can be produced by the process comprising each step shown in the following scheme.

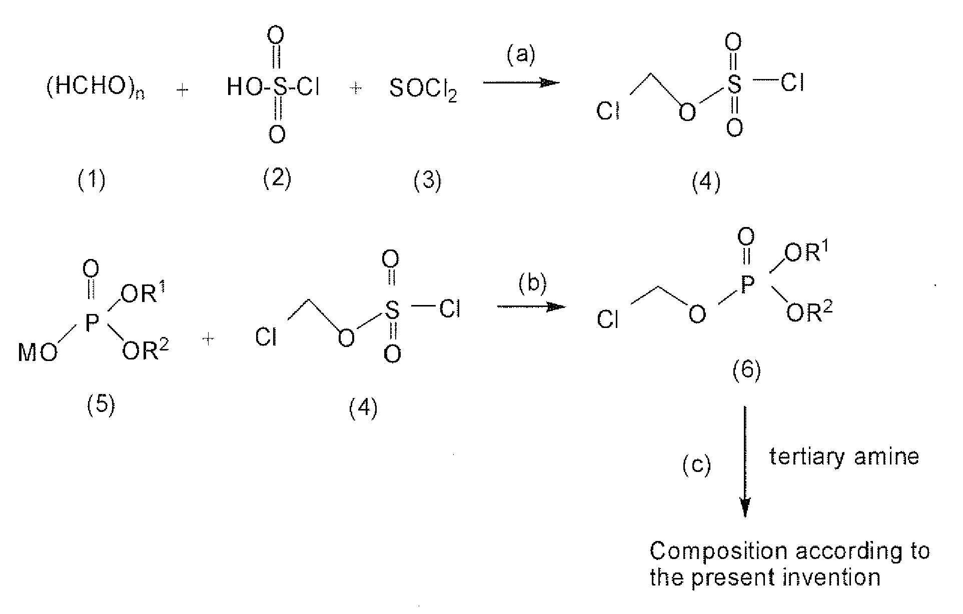

Note that in the above-mentioned scheme, R1 and R2 have the same definition as above. Further, M represents a hydrogen atom or an alkaline metal such as sodium or potassium. Furthermore, the term "room temperature" stated below means around 15 to 30°C.

### Regarding Step (a)

Step (a) is a step in which Compound (1), (2) and (3) are used to produce Compound (4). Specifically, chloromethyl chlorosulfonate (Compound (4)) can be produced by reacting paraformaldehyde (Compound (1)) and chlorosulfonic acid (Compound (2)). Since paraformaldehyde is a solid at room temperature, it is hazardous when added to a reaction solution under heating. Thus, in the present step, by letting thionyl chloride (Compound (3)) coexist, the reaction in Step (a) can be allowed to proceed in a solution state, allowing desirable results, such as yield improvement, to be obtained at a reaction temperature of approximately 80°C. Note that for raw materials used in the present step, commercially available products can be used as-is.

Although the reaction temperature in the present Step (a) is not limited in particular, it is from room temperature to 85°C, and preferably from room temperature to 80°C; although the reaction time is not limited in particular, it is in general from 1 to 20 hours, preferably from 1 hours 10 hours, and more preferably from 1 to 5 hours. Note that as reaction conditions of the present step, thionyl chloride, which is Compound (3) may be added dropwise after the Compounds (1) and (2) have been ready, or Compound (2) may be added after thionyl chloride has been added dropwise to Compound (1). After termination of the reaction in Step (a), Compound (4) can be obtained by the conventional work-up.

### Regarding Step (b)

Step (b) is a step in which Compound (4) obtained in Step (a) and Compound (5) are reacted to obtain Compound (6), which is a chloromethyl phosphate derivative. In particular, although the solvent used in the present step is not limited in particular as long as it dissolves to some extent the starting materials without inhibiting the reaction, examples of the solvent include mixed solvents of water and an ether-based organic solvent, such as diethyl ether, tetrahydrofuran, 1,4-dioxane, diethoxyethane, cyclopentyl methyl ether, *tert*-butyl methyl ether, and the like, may be cited. From the point of view of reaction yield, preferable examples of the solvent include mixed solvent of water and cyclopentyl methyl ether, and mixed solvent of water and *tert*-butyl methyl ether. As described in the forgoing, from the fact that there is no need to use a halogen-based solvent in Step (b), when applied to industrial production, there is little burden on the environment, and workability is excellent. Note that commercially available products may be used as-is for the raw materials used in the present step, which can also be produced by methods well known to those skilled in the art from commercially available products. Examples of Compound (5), commercially available products can be used as-is for dibutyl phosphate and dibenzyl phosphate, diallyl phosphate can be produced according to methods described in Muller, E. In Methoden Der Organischen Chemie (Houben-Wely); Georg Thieme: Stuttgart, Germany, 1964; Vol. 12/2, pp. 286-90, and di-*tert-*butyl phosphate can be produced from commercially available products according to methods described in, Zwierzak, A.; Kluba, M. Tetraherdon 1971, 27, pp. 3163-3170.

In addition, in Step (b), the phase-transfer catalyst and the base are used in the above mixed solvent. Examples of the phase-transfer catalysts used in the present invention include, but are not limited to, tetrabutylammonium chloride, tetrabutylammonium hydrogen sulfate, tetrabutylphosphonium chloride, trioctylmethyl ammonium chloride, and the like, and from the point of view of reaction yield, preferably, tetrabutylammonium hydrogen sulfate. Further, examples of the bases used together with the phase-transfer catalyst in the present invention include, but are not limited to, dipotassium hydrogen phosphate, sodium hydrogen carbonate, potassium hydrogen carbonate, and the like, and from the points of view of the solubility of the base *per* se and reaction yield, preferably, dipotassium hydrogen phosphate and sodium hydrogen carbonate.

Although the reaction temperature of present Step (b) is not limited in particular, it is in general from an ice-cold to solvent reflux temperature, and preferably from an ice-cold to room temperature. Although the reaction time of the present Step (b) is not also limited in particular, it is in general from 1 to 15 hours, preferably from 1 hour to 10 hours, and more preferably from 1 hour to 5 hours.

### Regarding Step (c)

Step (c) is a step in which a tertiary amine is added to (Compound 6) obtained in Step (b). As the addition method, although not limited in particular, after termination of the above Step (b), the reaction solution comprising the organic layer containing Compound (6), or the organic layer which washed with water, is added with a tertiary amine, without taking out Compound (6), and next, the organic layer is concentrated under a reduced pressure, allowing the composition according to the present invention to be obtained. Herein, the tertiary amine used in this Step (c) is the first tertiary amine with the same definition as above. Note that, it is preferable for the conservation stability of Compound (6), if, after the end of the above Step (b), the reaction solution containing the Compound (6) is washed with an aqueous solution containing an inorganic basic substance (may be either a hydrate or an anhydride), then, the organic layer is washed with water after addition of the second tertiary amine, and concentrated under a reduced pressure after addition of the first amine to the organic layer. Specific examples of inorganic basic substance include, but are in particular not limited to, trilithium phosphate, trisodium phosphate, tripotassium phosphate, lithium dihydrogen phosphate, sodium dihydrogen phosphate, dipotassium hydrogen phosphate, and the like.

As described above, in a case where the organic layer is concentrated under a reduced pressure, if a tertiary amine to be added prior to concentrating under the reduced pressure is at least the first tertiary amine used in the present invention, the possibility of amine vaporization is reduced. Moreover, the amine to be added during washing does not have to be the second tertiary amine, but can be the first tertiary amine.

As an amount of the first or second tertiary amine to be added, from the point of view of securing storage stability, at least 2.0mol% is added to the obtained Compound (6), or preferably at least 3.0mol%, more preferably at least 4.0mol%, or even more preferably at least 5.0mol% is added.

Hereinafter, stabilization method according to the present invention will be described. The stabilization method according to the present invention comprises the step of adding tertiary amine having a boiling point at 1 atmosphere of 150°C or higher to Compound (6) represented by the following formula (I):

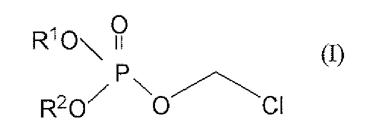

(wherein R1 and R2 have the same definitions as above). The method for adding first tertiary amine is in particular not limited to, as described in the above production of Compound (6), a prescribed amount of the first tertiary amine can be added prior to concentrating the reaction solution containing Compound (6).

From the point of view of securing storage stability, for the amount of the first tertiary amine added, at least 2.0mol% is added based on Compound (6), preferably at least 3.0mol%, more preferably at least 4.0mol%, and even more preferably at least 5.0mol%. Note that evaluation of storage stability can be carried out by calculation of peak area derived from Compound (6) by gas chromatography or high performance liquid chromatography or calculation of integration value by 1H-NMR or P-NMR measurement before and after storage.

According to the present invention, storage stability of Compound (6) *per se* is improved by adding the first and/or second tertiary amine to Compound (6).
If there were a detrimental effect on a property of Compound (6) as reaction reagent by the addition of tertiary amine, the role as a reaction reagent would not be met. However, with the composition according to the present invention, there was no effect on the reaction with the active drug having a hydroxyl group, even if an amount of tertiary amine of 10mol% was added based on Compound (6). Specifically, the reaction proceeded satisfactorily between (2R,3R)-3-[4-(4-cyanophenyl)thiazol-2-yl]-2-(2,4-difluorophenyl)-1-(1H-1,2,4-triazol-1-yl)-butan-2-ol having a tertiary hydroxyl group (refer to the following chemical formula) disclosed in U.S. Patent No. 5,648,372 and a compound containing di-tert-butyl chloromethyl phosphate, which is one Compound (6), and tri-n-butylamine, readily carrying out the introduction of a phosphate.

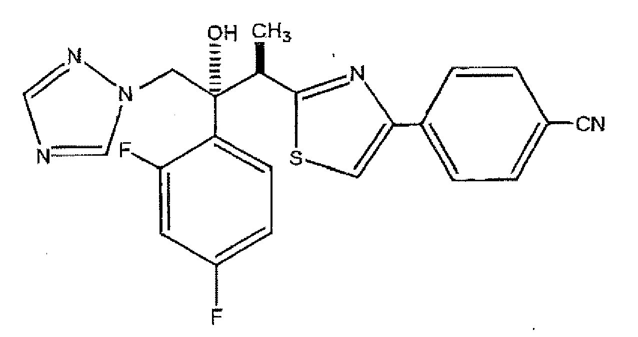

### Examples

Hereinafter, the present invention will be described more specifically by showing examples and the like; however these descriptions are illustrative examples, and the present invention is not limited thereto in any way.

### Manufacturing Example 1

### Synthesis of chloromethyl chlorosulfonate

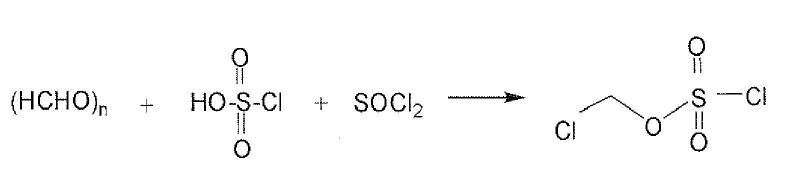

Paraformaldehyde (10g) was added to a 100mL four-neck flask and stirred in an ice-cooled water bath. Chlorosulfonic acid (24mL) was added thereto dropwise at an internal temperature of 80°C or lower, and after stirring at room temperature for one hour, thionyl chloride (22mL) was added thereto dropwise. After termination of the dropwise addition, the reaction solution was heated at 60°C for three hours, and then cooled. The reaction solution was added dropwise to ice water (400mL), and liquid separation was carried out. After washing with water, MgSO₄ was added to the organic layer, dilution was carried out with the same amount of hexane as the organic layer, and filtration was carried out. The filtrate was concentrated under a reduced pressure, resulting residue was distilled under a reduced pressure to obtain 15g of the title compound as a colorless clear liquid, (BP: 50 to 60°C/18 to 20 mmHg) (yield: 30%)

### Manufacturing Example 2

### Synthesis of chloromethyl chlorosulfonate

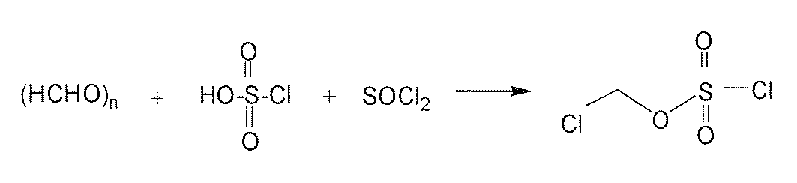

Paraformaldehyde (10g) was added to a 200mL four-neck flask and stirred in an ice-cooled water bath. Thionyl chloride (22mL) was added thereto dropwise, and then, chlorosulfonic acid (24mL) was added thereto dropwise. After stirring at room temperature for four hours, the reaction solution was heated at 60°C for 14 hours, and then cooled. The reaction solution was added dropwise to ice water (400mL), and liquid separation was carried out. After washing with water, MgSO₄ was added to the organic layer, dilution was carried out with the same amount of hexane as the organic layer, and filtration was carried out. After concentration under a reduced pressure, the resulting residue was distilled under a reduced pressure to obtain 7.9g of the title compound as a colorless clear liquid. (BP: 54°C/15 mmHg) (yield: 16%)

### Example 1

### Synthesis of di-tert-butyl chloromethyl phosphate

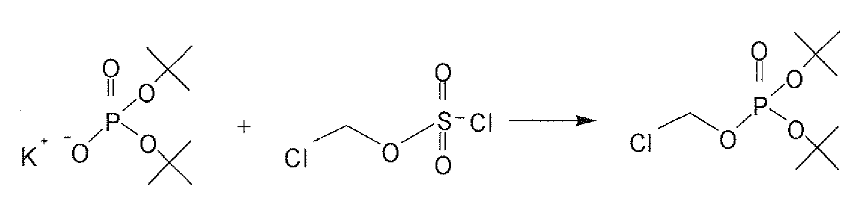

A 2L four-neck round bottom flask was equipped with a mechanical stirrer and a thermometer, potassium di-tert-butyl phosphate (100g), dipotassium hydrogenphosphate (561.2g), tetrabutylammonium hydrogen sulfate(13.7g), tert-butyl methyl ether (400mL) and water (700mL) were added and stirred under cooling with a water bath. At the internal temperature of 23°C, chloromethyl chlorosulfonate (99.7g) was added dropwise over two hours, with an internal temperature of 28°C or lower. After termination of the dropwise addition, the solution was stirred for two hours, water (300mL) was added thereto, the lower layer was separated, and the organic layer was washed with an aqueous solution of 5N sodium hydroxide (600mL) and an aqueous solution of 2M dipotassium hydrogen phosphate (600mL). The organic layer was added with N,N-diisopropyl ethylamine (10.4g) and washed with water (200mL). In addition, after adding N,N-diisopropyl ethylamine (10.4g) and washing with water (200mL), tri-n-butylamine (1.49g) was added, and the organic layer was dried over anhydrous sodium sulfate (20g). After sodium sulfate was filtered, the bath temperature was set to 35°C, the solution was concentrated under a reduced pressure, then, tri-n-butylamine (0.75g) was added thereto and mixed to obtain 92.6g of the title compound (yield: 89%).
Note that according to analysis by gas chromatography, the obtained title compound contained N,N-diisopropyl ethylamine (3.1%) and tri-n-butylamine (2.0%), respectively 5.5mol% and 2.5mol% based on the raw material potassium di-tert-butyl phosphate, which was a total of 8.0mol% as tertiary amine. Furthermore, they were respectively 6.6mol% and 3.0mol% based on the obtained di-tert-butyl chloromethyl phosphate, which was a total of 9.6mol% as tertiary amine.
In addition, the content (purity) immediately after the title compound was obtained was 94%, and the content (purity) after sealed storage for three weeks was at room temperature 92%. The content (purity) was calculated by 1H-NMR measurements with 4-thiomethyl acetophenone as the internal standard substance.

### Example 2

### <Stability Experiment for the Addition of Tri-n-butylamine>

Potassium di-tert-butyl phosphate (6g), dipotassium hydrogenphosphate (16.6g), tetrabutylammonium hydrogen sulfate (0.81g), tert-butyl methyl ether (28mL) and water (21 mL) were added in a 100mL two-neck round bottom flask equipped with a thermometer, and stirred under cooling with a water bath. At an internal temperature of 21°C, a solution of chloromethyl chlorosulfonate (5.88g) dissolved in tert-butyl methyl ether (5.88mL) was added dropwise over two hours at an internal temperature of 25°C or lower. After termination of the drop wise addition, the solution was stirred for two hours, water (21 mL) and tert-butyl methyl ether (28mL) were added thereto, the lower layer was separated and the organic layer was washed with an aqueous solution of 2M dipotassium hydrogen phosphate (21 mL). After washing twice with water (21 mL), bath temperature was set to 35°C, and the solution was concentrated under a reduced pressure to obtain 5.38g of the title compound (yield: 86%).
Tri-n-butylamine (0.11g) was added to a 2.69g half of the obtained title compound, and nothing was added to the remaining 2.69g half of the title compound, sealed storage was carried out at 40°C for 12 hours and further at 50°C for 12hours, the content (purity) before and after storage was checked, then, sealed storage was continued further at 50°C for 10 hours and the content (purity) was checked. Note that the addition amount of the tri-n-butylamine added was 5mol% based on the raw material potassium di-tert-butyl phosphate, and 6mol% based on the obtained di-tert-butyl chloromethyl phosphate.
As a result, contents (purity) of respectively 92% and 96% prior to storage were 89% and 70% after sealed storage at 40°C for 12 hours and further at 50°C for 12 hours, and were 87% and 0% (completely degraded) after sealed storage further at 50°C for 10 hours, such that the one added with tri-n-butylamine was stable. The content (purity) was calculated by 1H-NMR measurements with 4-thiomethyl acetophenone as internal standard substance.

**[Table1]**

| Storage conditions | Content (%) | |
|---|---|---|
| | TBA added | Not added |
| Initial | 92%* | 96% |
| Sealed storage at 40°C for 12 hours then further at 50°C for 12 hours | 89% | 70% |
| Sealed storage further at 50°C for 10 hours | 87% | 0% |

| | | |
|---|---|---|
| *: The content diminished by the amount of TBA added. *: In the table, TBA indicates tri-n-butylamine. | | |

From the above, it could be confirmed that by the presence of tri-n-butylamine as tertiary amine with a boiling point at 1 atmosphere of 150°C or higher with di-tert-butyl chloromethyl phosphate, stability of the phosphate *per se* was remarkably improved.

### Industrial Applicability

According to the production process of the present invention, chloromethyl phosphate derivatives can be produced without using highly toxic reagent or halogen series solvent with a method that is excellent from the points of view of workability, operativity and energy saving, thus, the production process is useful industrially. In addition, according to the present invention, stabilization of chloromethyl phosphate derivatives are realized by adding a tertiary amine to chloromethyl phosphate derivatives applicable to the production of a water-soluble prodrug, a stable supply of said derivative becomes possible, which is beneficial to industrial production of water-soluble prodrugs.

## Claims

1. A composition comprising:
(A) a compound represented by the following formula (I) 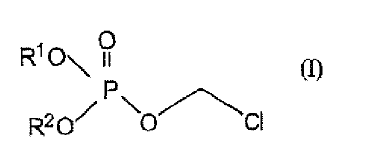 (wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring.); and
(B) a first tertiary amine having a boiling point at 1 atmosphere of 150°C or higher.

2. The composition according to Claim 1, further comprising a second tertiary amine different from the first tertiary amine.

3. The composition according to Claim 1 or 2, wherein the first tertiary amine is tri(C4-C6 alkyl) amine or trialkanol amine.

4. The composition according to any one of Claims 1 to 3, wherein the first tertiary amine is tri-n-butylamine or triethanolamine.

5. The composition according to any one of Claims 2 to 4, wherein the second tertiary amine is tri(C1-C3 alkyl) amine or N-alkyl morpholine.

6. The composition according to any one of Claims 2 to 5, wherein the second tertiary amine is triethylamine, N,N-diisopropyl ethylamine or N-methyl morpholine.

7. The composition according to any one of Claims 1 to 6, wherein at least 2.0 mol% of the first tertiary amine is contained based on the compound represented by formula (I).

8. The composition according to any one of Claims 1 to 7, wherein at least 2.0 mol% of the second tertiary amine is contained based on the compound represented by formula (I).

9. The composition according to any one of Claims 1 to 8, wherein the R1 and the R2 are identical or different from each other, and represent an n-butyl group, an iso-butyl group, a tert-butyl group, a vinyl group, an allyl group, or a benzyl group which may have a substituent.

10. The composition according to any one of Claims 1 to 9, wherein the R1 and the R2 are identical or different from each other, and represent a tert-butyl group, an allyl group or a benzyl group.

11. A process for producing a composition comprising a compound represented by the following formula (I) and a tertiary amine, 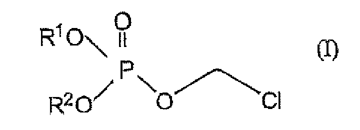 (wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring.)
the process comprising a step of adding a first tertiary amine having a boiling point at 1 atmosphere of 150°C or higher to the compound represented by formula (I).

12. The process according to Claim 11, further comprising a step of adding a second tertiary amine different from the first tertiary amine.

13. The process according to Claim 11 or 12, wherein at least 2.0mol% of the first tertiary amine is added to the compound represented by formula (I).

14. The process according to any one of Claims 11 to 13, wherein at least 2.0mol% of the second tertiary amine is added to the compound represented by formula (I).

15. The process according to any one of Claims 11 to 14, wherein the compound represented by formula (I) is obtained by a process comprising the steps of:
(i) reacting paraformaldehyde with chlorosulfonic acid in the presence of thionyl chloride so as to obtain chloromethyl chlorosulfonate, and
(ii) reacting, in a solvent containing a phase-transfer catalyst and a base, a compound represented by the following formula (II), 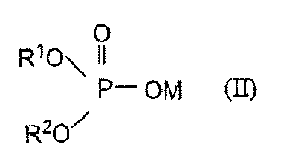 (wherein R1 and R2 are identical or different from each other, and represent a C1-C6 alkyl group, a C2-C6 alkenyl group or a C6-C14 aryl C1-C6 alkyl group which may have a substituent, R1 and R2 may together form a ring, and M represents a hydrogen atom or an alkaline metal) and the chloromethyl chlorosulfonate.

16. The process according to Claim 15, wherein the solvent is an ether-based solvent.

17. The process according to Claim 16, wherein the ether-based solvent is cyclopentyl methyl ether or tert-butyl methyl ether.

18. The process according to any one of Claims 15 to 17, wherein the phase-transfer catalyst is tetrabutylammonium hydrogen sulfate, and the base is dipotassium hydrogen phosphate or sodium hydrogen carbonate.

19. A method for stabilizing a compound represented by the following formula (I), 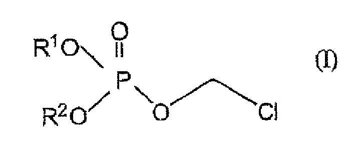 (wherein R1 and R2 are identical or different from each other, and represent a C1-C6 alkyl group, a C2-C6 alkenyl group or a C6-C14 aryl C1-C6 alkyl group which may have a substituent, and R1 and R2 may together form a ring),
the method comprising a step of adding a first tertiary amine having a boiling point at 1 atmosphere of 150°C or higher to the compound represented by Formula (I).

20. The stabilization method according to Claim 19, wherein at least 2.0mol% of the first tertiary amine is added based on the compound represented by formula (I).
